# EUROPÄISCHE PATENTANMELDUNG

(11) **EP 3 540 549 A1**
(43) Veröffentlichungstag der Anmeldung: **18.09.2019**
(21) Anmeldenummer: 18161938.8
(22) Anmeldetag: 15.03.2018
(51) Int. Cl.: G05D 1/00, B25J 9/16

(54) **VERFAHREN UND SYSTEM ZUM BEGRENZEN EINER MECHANISCHEN BEWEGUNG UND/ODER EINES WIRKUNGSBEREICHS EINER MASCHINE**

(71) Anmelder: Siemens Aktiengesellschaft, 80333 München (DE)
(72) Erfinder: Falk, Rainer, 85586 Poing (DE)

(57) **Zusammenfassung**

Die Erfindung betrifft ein Verfahren, ein System (10), eine Steuervorrichtung (101a,101b) und ein Computerprogrammprodukt zum rechnergestützten Begrenzen einer mechanischen Bewegung und/oder eines Wirkungsbereichs einer über ein Kommunikations- oder Datennetzwerk (NW) gesteuerten Maschine (100). Es wird die mechanische Bewegung und/oder der bestimmte Wirkungsbereich der Maschine (100) anhand mindestens eines von einer Netzwerkqualität des Kommunikations- oder Datennetzwerks (NW) abhängigen Begrenzungsparameters begrenzt. Es ist ein Vorteil der Erfindung eine Steuerung einer Maschine (100) bei schlechter Netzwerkqualität zu ermöglichen.

## Beschreibung

Die Erfindung betrifft ein Verfahren und ein System zum rechnergestützten Begrenzen einer mechanischen Bewegung und/oder eines Wirkungsbereichs einer über ein Kommunikations- oder Datennetzwerk gesteuerten Maschine.

Bei der Steuerung einer Maschine über ein Netzwerk, z.B. als Komponente einer industriellen Automatisierungsanlage, wird eine verlässliche Kommunikationsverbindung zwischen einer beispielsweise zentralen Steuereinheit und der Maschine benötigt. Die Kommunikationsverbindung kann sowohl kabelgebunden, optisch oder auch drahtlos ausgebildet sein. Insbesondere bei funkgesteuerten Maschinen ist eine gute Netzwerkabdeckung, Verbindungsqualität und verlässliche Kommunikation erforderlich.

Es ist bekannt, bei einem Aufbau einer Kommunikationsverbindung zwischen einer Maschine und einer Steuereinheit die erforderliche Dienstgüte-Eigenschaften eines Kommunikationsdienstes, auch bekannt als Quality-of-Service-Eigenschaften, auszuwählen und die Steuerung nur dann durchzuführen, wenn die erforderlichen Eigenschaften gegeben sind.

Für ein Mobilfunknetz mit dem Netzwerkstandard 5G der Standardisierungsorganisation 3rd Generation Partnership Project, auch als 3GPP bekannt, ist darüber hinaus bekannt, virtuelle Netzabschnitte, sogenannte "Network Slices", einzurichten und diese jeweils für verschiedene Anforderungen an Datenraten, Geschwindigkeiten und Kapazitäten bestimmter industrieller Anwendungen einzurichten.

Wenn ein Netzwerk nicht die erforderliche Güte, bei z.B. Datendurchsatz, Latenz, Paketverlustrate usw., aufweist, wird in der Regel die Verbindung zur gesteuerten Maschine unterbrochen bzw. es kann über das Netzwerk keine Steuerung einer Maschine erfolgen.

Es ist eine Aufgabe der vorliegenden Erfindung, die Steuerung einer Maschine über ein Netzwerk bei Störungen oder mangelhaften Bedingungen des Netzwerks zu gewährleisten.

Gelöst wird diese Aufgabe durch ein Verfahren und ein System mit den Merkmalen der unabhängigen Patentansprüche. Vorteilhafte Ausführungsformen und Weiterbildungen der Erfindung sind in den abhängigen Ansprüchen angegeben.

Ein erster Aspekt der Erfindung betrifft ein Verfahren zum rechnergestützten Begrenzen einer mechanischen Bewegung und/oder eines Wirkungsbereichs einer über ein Kommunikations- oder Datennetzwerk gesteuerten Maschine, wobei die mechanische Bewegung und/oder der Wirkungsbereich der Maschine anhand mindestens eines von einer Netzwerkqualität des Kommunikations- oder Datennetzwerks abhängigen Begrenzungsparameters begrenzt wird.

Ein Vorteil der Erfindung ist dabei, dass eine Maschine bei unzureichender Netzwerkqualität weiter betrieben werden kann, da die mechanische Bewegung und/oder der Wirkungsbereich der Maschine lediglich eingeschränkt oder begrenzt wird, insbesondere ohne den Betrieb zu unterbrechen. Es kann insbesondere die mechanische Bewegung und/oder der Wirkungsbereich der Maschine oder mindestens einer Komponente der Maschine begrenzt werden, wobei die Maschine beispielsweise mehrere bewegliche Komponenten umfassen kann.

Vorzugsweise kann die mechanische Bewegung und/oder der Wirkungsbereich bei schlechter Netzwerkqualität derart eingeschränkt werden, dass nachfolgende Steuerbefehle zur Steuerung der Maschine, z.B. bei verzögertem Übermitteln, trotzdem umgesetzt werden können.

Eine Steuerung bzw. Regelung der Maschine über das Kommunikations- oder Datennetzwerk kann zuverlässig unter den aktuell vorliegenden Netzwerkbedingungen durchgeführt werden und wird lediglich gemäß den Begrenzungsparametern begrenzt. Dadurch ist eine Steuerung einer über ein Netzwerk gesteuerten Maschine robuster unter zufälligen oder absichtlich hervorgerufenen Leistungsbeschränkungen, wie z.B. Störungen durch Störsender oder Denial-of-Service-Angriffe, eines verwendeten Netzwerks.

Eine über ein Kommunikations- oder Datennetzwerk gesteuerten Maschine kann ein Roboter, ein Gerät im Internet-der-Dinge, ein autonomes Fahrzeug oder Flugobjekt, oder eine Produktionsmaschine in einer industriellen Automatisierungsanlage sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Die Maschine wird über ein Kommunikations- oder Datennetzwerk gesteuert, wobei das Kommunikations- oder Datennetzwerk entweder kabellos oder kabelgebunden realisiert sein kann. Insbesondere kann die Maschine Steuerbefehle, z.B. zur Steuerung eines Aktors, über das Kommunikations- oder Datennetzwerk erhalten oder es können beispielsweise Sensordaten einer Maschine in das Netzwerk eingegeben werden. Steuerbefehle können beispielsweise zentral von einem Server aus verwaltet und zum Steuern der Maschine übermittelt werden.

Beispielsweise umfasst die Maschine einen Aktor, der Steuerbefehle in eine mechanische Bewegung umsetzt. Es können die Steuerbefehle auch die mechanische Bewegung und/oder den Wirkungsbereich der Maschine selbst betreffen. Abhängig von der Netzwerkqualität des Kommunikations- oder Datennetzwerks gibt der mindestens eine Begrenzungsparamater an, inwieweit die mechanische Bewegung und/oder der Wirkungsbereich der Maschine eingegrenzt wird. Es erfolgt beispielsweise eine Steuerung gemäß bestimmter Steuerbefehle, welche anhand der Begrenzungsparameter angepasst werden. Die Begrenzung erfolgt insbesondere unabhängig von den Steuerbefehlen. Der Begrenzungsparameter kann Angaben umfassen, wie eine von der Steuerung bestimmte Bewegung und/oder Wirkungsbereich abhängig von der Netzwerkqualität begrenzt wird.

Die Netzwerkqualität des Kommunikations- oder Datennetzwerks beschreibt beispielsweise die Konnektivität und/oder die Netzabdeckung des Netzwerks. In anderen Worten, die Netzwerkqualität betrifft einen Zustand oder eine Eigenschaft des Netzwerks und/oder insbesondere einer Netzwerkverbindung zwischen mindestens zwei Kommunikationsgeräten, z.B. Maschine und Server. Insbesondere kann der mindestens eine Begrenzungsparameter von der Qualität der Netzwerkverbindung von einer Netzwerkkomponente, wie z.B. einem Server, zur Maschine abhängig sein. Es ist denkbar, dass mehr als ein Begrenzungsparameter zum Begrenzen verschiedener mechanischer Bewegungen und/oder verschiedenen Wirkungsbereichen der Maschine bereitgestellt wird.

Beispielsweise kann bei einer mangelhaften Netzqualität des Kommunikations- oder Datennetzwerks eine Maschine weiterhin über das Netzwerk gesteuert werden, d.h. der Betrieb der Maschine muss nicht unterbrochen werden, wobei beispielsweise die gesteuerten mechanischen Bewegungen langsamer oder in einem begrenzten Aktionsradius durchgeführt werden. Es ist auch denkbar, dass durch die Begrenzung aufgrund von einer schlechten Netzwerkqualität, die Maschine in einen Sicherheitsmodus gesetzt werden kann, wobei beispielsweise ein Wirkungsbereich der Maschine eingeschränkt sein kann.

Gemäß einer vorteilhaften Ausführungsform des Verfahrens wird die mechanische Bewegung und/oder der Wirkungsbereich der Maschine durch eine Steuervorrichtung, die über das Kommunikations- oder Datennetzwerk Steuerbefehle empfängt, und die in die Maschine integriert oder mit der Maschine gekoppelt oder als Applikation auf einem Server implementiert ist, gesteuert.

Die Maschine wird über ein Kommunikations- oder Datennetzwerk gesteuert, d.h. beispielsweise erhält die Maschine Steuerbefehle von einer zentralen Kontrolleinheit. Die Steuervorrichtung setzt die Steuerbefehle in mechanische Bewegung um und/oder bestimmt den Wirkungsbereich der Maschine. Die Steuervorrichtung kann auf der Maschine integriert oder mit dieser gekoppelt oder als Applikation auf einem Server implementiert sein, und beispielsweise Steuerbefehle einem Aktor übertragen.

Gemäß einer vorteilhaften Ausführungsform des Verfahrens werden Testdaten zur Überwachung der Netzwerkqualität generiert und es wird die Netzwerkqualität mittels der Testdaten ermittelt und daraus mindestens ein Netzwerkgüteparameter bereitgestellt.

Mittels der Überwachung der Netzwerkqualität wird mindestens ein Netzwerkgüteparameter ermittelt, der z.B. eine Aussage über die allgemeine Netzwerkkonnektivität oder insbesondere über die Kommunikationsverbindung zur Maschine liefern kann. Vorzugsweise kann mittels erzeugter Testdaten, die beispielsweise an einen Testempfänger übertragen werden, die Netzwerkqualität überprüft werden. Es können vorzugsweise mittels der Testdaten Messungen der Signalstärke eines Funknetzwerks oder die Verbindung zwischen einer Steuervorrichtung und der Maschine überwacht werden. Es kann häufig auch vorteilhaft sein, vorverarbeitete Angaben zur Netzwerkqualität von einem Netzbetreiber zu nutzen, welche beispielsweise als Netzwerkgüteparameter von einer Netzwerk-Überwachungseinheit des Netzbetreibers bereitgestellt werden können. Insbesondere kann ein netzwerkbasiertes Angriffserkennungstool realisiert sein, welches beispielsweise Denial-of-Service-Angriffe detektiert und die dadurch verschlechterten Netzwerkbedingungen ermittelt und als Netzwerkgüteparameter bereitstellt. Es können außerdem Netzwerkgüteparameter des Netzbetreibers und durch generierte Testdaten ermittelte Netzwerkgüteparameter genutzt werden.

Gemäß einer vorteilhaften Ausführungsform des Verfahrens wird abhängig von dem mindestens einen Netzwerkgüteparameter der mindestens eine Begrenzungsparameter ermittelt.

Der mindestens eine Netzwerkgüteparameter gibt die Güte eines Zustands des Netzwerks an und kann vorteilhaft genutzt werden, den mindestens einen Begrenzungsparameter zu ermitteln. Abhängig von der Netzwerkqualität wird ein Begrenzungsparameter derart ermittelt, dass beispielsweise bestimmte Bewegungen der Maschine kontrolliert werden können.

Gemäß einer vorteilhaften Ausführungsform des Verfahrens wird die Netzwerkqualität kontinuierlich oder in vorgegebenen Zeitabständen ermittelt.

Es kann die Netzwerkqualität kontinuierlich oder in vorgegebenen Zeitabständen, wie z.B. regelmäßig, überprüft werden und daraus aktualisierte Netzwerkgüteparameter bereitgestellt werden. Insbesondere kann ein Netzwerkgüteparameter wiederholt aktualisiert und bereitgestellt werden.

Gemäß einer vorteilhaften Ausführungsform des Verfahrens wird der mindestens eine Begrenzungsparameter kontinuierlich oder wiederholt in vorgegebenen Zeitabständen oder bei Inbetriebnahme der Maschine ermittelt.

Es kann beispielsweise der Begrenzungsparameter im laufenden Betrieb der Maschine kontinuierlich oder wiederholt in vorgegebenen Zeitintervallen ermittelt werden, wenn sich die Netzwerkqualität mit der Zeit ändert. Es kann der Begrenzungsparameter beispielsweise auch bei Inbetriebnahme der Maschine oder zwischen zwei Arbeitsschritten ermittelt werden.

Gemäß einer vorteilhaften Ausführungsform des Verfahrens wird anhand des mindestens einen Begrenzungsparameters eine Bahngeschwindigkeit, Geschwindigkeit je Achse oder Antrieb, eine Winkelgeschwindigkeit, eine Längsbeschleunigung, eine Beschleunigung je Achse oder Antrieb, eine Winkelbeschleunigung, einen Aktionsradius, eine Raumnutzung, eine Kraft, ein Druck, oder eine Auslenkung der Maschine begrenzt.

Der mindestens eine Begrenzungsparameter beschränkt beispielsweise die Geschwindigkeit der Maschine selbst und/oder einer Komponente der Maschine, wie z.B. ein Aktor. Insbesondere können mehr als ein Begrenzungsparameter verschiedene mechanische Bewegungen und/oder Wirkungsbereiche einer Maschine eingrenzen. Es ist auch denkbar, dass der Begrenzungsparameter beim Einschränken des Wirkungsbereichs bestimmte, von der Maschine durchgeführte Handlungen oder Manöver eingrenzt oder ausschließt. Die Begrenzung durch den Begrenzungsparameter betrifft beispielsweise lediglich die Geschwindigkeit nicht aber die Richtung einer Bewegung, so dass insbesondere das aus der Bewegung resultierende Ergebnis, wie z.B. Montage eines Teils, nicht beeinflusst wird, sondern lediglich langsamer durchgeführt wird. Auch ist es möglich, den Druck, beispielsweise eines hydraulischen Antriebs, oder eine Kraft, z.B. eines Greifarms eines Roboters, zu begrenzen.

Ein weiterer Aspekt der Erfindung betrifft ein System zum rechnergestützten Begrenzen einer mechanischen Bewegung und/oder eines Wirkungsbereichs einer über ein Kommunikations- oder Datennetzwerk gesteuerten Maschine, umfassend ein Begrenzungsmodul, das der Maschine zugeordnet ist und das derart ausgebildet ist, die mechanische Bewegung und/oder den Wirkungsbereich der Maschine anhand mindestens eines von einer Netzwerkqualität des Kommunikations- oder Datennetzwerks abhängigen Begrenzungsparameters zu begrenzen.

Mittels des Begrenzungsmoduls kann eine mechanische Bewegung und/oder ein Wirkungsbereich einer über ein Netzwerk gesteuerten Maschine begrenzt werden.

Gemäß einer vorteilhaften Ausführungsform des Systems ist die Steuervorrichtung in die Maschine integriert oder mit der Maschine gekoppelt und derart ausgebildet, die mechanische Bewegung und/oder den Wirkungsbereich der Maschine über das Kommunikations- oder Datennetzwerk zu steuern.

Beispielsweise kann die Steuervorrichtung eine separate Komponente sein, die mit der Maschine verbunden ist, die über das Netzwerk Steuerbefehle empfängt und an die Maschine weiterleitet. Insbesondere kann die Steuervorrichtung kabellos mit dem Netzwerk verbunden sein, wobei die Steuervorrichtung mit der Maschine kabelgebunden gekoppelt ist.

Gemäß einer vorteilhaften Ausführungsform des Systems ist die Steuervorrichtung als Applikation auf einem Server implementiert, und derart ausgebildet, die mechanische Bewegung und/oder den Wirkungsbereich der Maschine über das Kommunikations- oder Datennetzwerk zu steuern.

Eine über ein Netzwerk gesteuerte Maschine kann insbesondere zentral oder dezentral, wie z.B. von einem Cloud-Server oder einem Edge-Cloud-Server, gesteuert werden. Dies ist insbesondere vorteilhaft, wenn mehrere Maschinen in einer Automatisierungsanlage koordiniert über eine zentrale Einheit gesteuert werden. Die Steuervorrichtung zum Ausführen der Steuerbefehle für die Maschine kann vorzugsweise als Applikation eingerichtet sein, welche z.B. einen Aktor der Maschine ansteuert. Die Kommunikation zwischen Server und Maschine kann kabellos oder kabelgebunden erfolgen. Beispielsweise können Steuerbefehle aus einem Speicher oder einer Datenbank an die Steuervorrichtung übermittelt werden, welche die Steuerbefehle an die Maschine übergibt.

Gemäß einer vorteilhaften Ausführungsform kann das System einen Testdaten-Generator umfassen, der derart ausgebildet ist, Testdaten zur Überwachung der Netzwerkqualität zu generieren und bereitzustellen.

Gemäß einer vorteilhaften Ausführungsform kann ein System ein Vermessungsmodul umfassen, das derart ausgebildet ist, mittels der Testdaten die Netzwerkqualität zu ermitteln und mindestens einen Netzwerkgüteparameter bereitzustellen.

Der Testdaten-Generator kann insbesondere Testdaten generieren, die an einen Test-Empfänger übermittelt werden, um mit dem Vermessungsmodul beispielsweise die Verbindungsqualität zu vermessen. Das Ergebnis der Messung der Netzwerkqualität kann beispielsweise als mindestens ein Netzwerkgüteparameter bereitgestellt werden.

Gemäß einer vorteilhaften Ausführungsform des Systems kann das Begrenzungsmodul derart ausgebildet sein, den mindestens einen Begrenzungsparameter abhängig von dem mindestens einen Netzwerkgüteparameter zu ermitteln.

Ein weiterer Aspekt der Erfindung betrifft eine Steuervorrichtung, die einer über ein Kommunikations- oder Datennetzwerk gesteuerten Maschine zugeordnet ist und derart ausgebildet ist,
- Steuerbefehle über das Kommunikations- oder Datennetzwerk zu empfangen
   und
- die mechanische Bewegung und/oder den Wirkungsbereich der Maschine zu steuern, wobei die mechanische Bewegung und/oder der Wirkungsbereich der Maschine anhand
   mindestens eines von einer Netzwerkqualität des Kommunikations- oder Datennetzwerks abhängigen Begrenzungsparameters begrenzt wird.

Die Steuervorrichtung kann insbesondere Teil der Maschine oder mit der Maschine gekoppelt oder als Applikation auf einem Server implementiert sein. Die Verbindung zwischen Steuervorrichtung und dem Kommunikations- oder Datennetzwerk kann entweder kabelgebunden oder kabellos eingerichtet sein. Ein Begrenzungsmodul, zum Begrenzen der mechanischen Bewegung und/oder des Wirkungsbereichs durch mindestens einen Begrenzungsparameter, kann dementsprechend als Teil der Steuervorrichtung oder mit ihr gekoppelt verstanden werden. Die Steuervorrichtung ist insbesondere vorteilhaft, da die durch die Steuerbefehle kontrollierte mechanische Bewegung und/oder der Wirkungsbereich bei schlechter Netzwerkqualität begrenzt werden kann, ohne den Betrieb der Maschine einzustellen.

Des Weiteren betrifft die Erfindung ein Computerprogrammprodukt, das direkt in einen programmierbaren Computer ladbar ist, umfassend Programmcodeteile, die dazu geeignet sind, das Verfahren durchzuführen.

Ein Computerprogrammprodukt kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt erfolgen.

Ausführungsbeispiele des erfindungsgemäßen Verfahrens, des Systems und der Steuervorrichtung sind in den Zeichnungen beispielhaft dargestellt und werden anhand der nachfolgenden Beschreibung näher erläutert. Es zeigen in schematischer Darstellung:
- Fig. 1: ein Ablaufdiagramm des erfindungsgemäßen Verfahrens zum rechnergestützten Begrenzen einer mechanischen Bewegung und/oder eines Wirkungsbereichs einer über ein Kommunikations- oder Datennetzwerk gesteuerten Maschine;
- Fig. 2: ein erstes Ausführungsbeispiel des erfindungsgemäßen Systems zum rechnergestützten Begrenzen einer mechanischen Bewegung und/oder eines Wirkungsbereichs einer über ein Kommunikations- oder Datennetzwerk gesteuerten Maschine;
- Fig. 3: ein zweites Ausführungsbeispiel des erfindungsgemäßen Systems zum rechnergestützten Begrenzen einer mechanischen Bewegung und/oder eines Wirkungsbereichs einer über ein Kommunikations- oder Datennetzwerk gesteuerten Maschine;
- Fig. 4: ein drittes Ausführungsbeispiel des erfindungsgemäßen Systems zum rechnergestützten Begrenzen einer mechanischen Bewegung und/oder eines Wirkungsbereichs einer über ein Kommunikations- oder Datennetzwerk gesteuerten Maschine;
- Fig. 5: ein viertes Ausführungsbeispiel des erfindungsgemäßen Systems zum rechnergestützten Begrenzen einer mechanischen Bewegung und/oder eines Wirkungsbereichs einer über ein Kommunikations- oder Datennetzwerk gesteuerten Maschine; und
- Fig. 6: ein Ausführungsbeispiel der erfindungsgemäßen Steuervorrichtung in Blockdarstellung.

Einander entsprechende Gegenstände sind in allen Figuren mit den gleichen Bezugszeichen versehen.

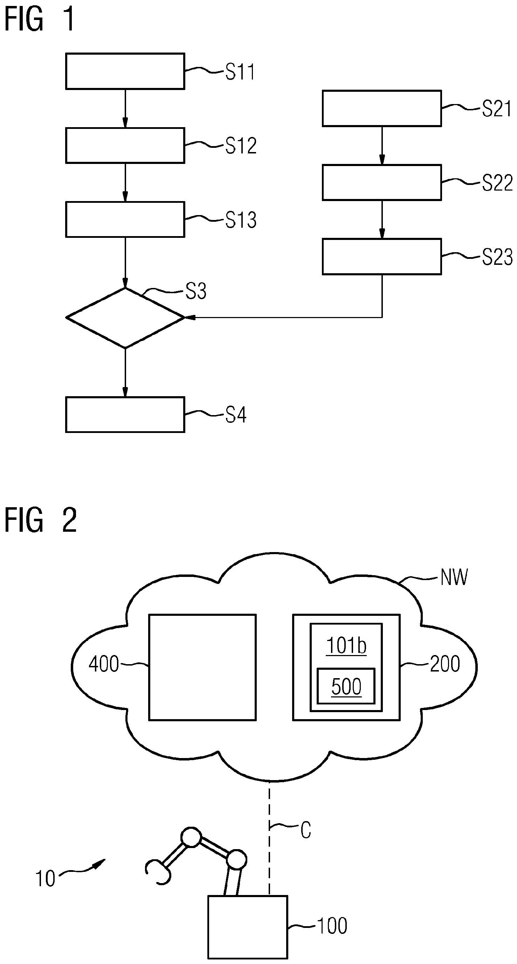

Figur 1 zeigt in schematischer Darstellung ein Ablaufdiagramm mit Schritten des erfindungsgemäßen Verfahrens. Als Anwendungsbeispiel wird zur Erläuterung der Verfahrensschritte die Steuerung eines Roboters über ein Netzwerk genannt.

Im Schritt S11 des Verfahrens wird ein Steuerbefehl für eine Bewegung des Roboter oder eines Teils des Roboters bereitgestellt und in Schritt S12 über ein Kommunikations- oder Datennetzwerks einer Steuervorrichtung bereitgestellt. Beispielsweise wird der Roboter über einen Edge-Cloud-Server gesteuert, wobei die Steuervorrichtung als Applikation auf dem Server eingerichtet ist. Die Steuervorrichtung prozessiert den Steuerbefehl und gibt diesen an den Roboter weiter. So kann beispielsweise der Steuerbefehl die Steuerung eines Roboterarms betreffen. Im genannten Beispiel kann ein Roboter beispielsweise bei der Produktion eingesetzt sein. Typischerweise umfasst der Steuerbefehl eine genaue Beschreibung für die Durchführung einer mechanischen Bewegung, beispielsweise in einem vorgegebenen Aktionsradius und mit einer vorgegebenen Dynamik. Der Roboter dient hier als Beispiel für eine vorteilhafte Anwendung der Erfindung. Sie kann jedoch ebenso für andere Maschinen, z.B. Produktionsmaschinen oder autonome Fahrzeuge, z.B. einem führerlosen Transportsystem oder einem autonomen Schienenfahrzeug, angewandt werden.

Es ist eine stabile Netzwerkbeschaffenheit des Netzwerks zur Übermittlung der Steuerbefehle wünschenswert. Bei einer hohen Netzwerkqualität ist keine Einschränkung des Produktionsbetriebs erforderlich, wohingegen bei z.B. eingeschränkter Konnektivität der Betrieb einer Maschine eingeschränkt werden kann.

Insbesondere bei der Produktion ist es wünschenswert, die Ausfallrate eines Produktionsroboters gering zu halten. Es wird in Schritt S21 die Netzwerkqualität überwacht. Es kann mittels generierter Testdaten eine Vermessung der Netzwerkeigenschaften durchgeführt werden, um daraus Netzwerkgüteparameter zu ermitteln, siehe Schritt S22. Die Überprüfung und Vermessung kann regelmäßig oder kontinuierlich erfolgen. In einer Variante kann die Überprüfung der Netzwerkqualität bei Beginn eines Prozessschritts einer Steuerung mit mehreren Prozessschritten der Robotersteuerung bzw. Maschinensteuerung erfolgen. Es können auch Netzwerkgüteparameter von Netzbetreibern bereitgestellt werden und/oder zusammen mit den durch Testdaten ermittelten Netzwerkgüteparametern ermittelten genutzt werden. Die Netzwerkgüteparameter können kontinuierlich oder in vorgegebenen Zeitabständen ermittelt werden. Abhängig von den Netzwerkgüteparametern werden Begrenzungsparameter erstellt, siehe Schritt S23. Die Begrenzungsparameter werden derart bereitgestellt, dass sie die mechanische Bewegung und/oder den Wirkungsbereich der Maschine abhängig von den Netzwerkbedingungen einschränken. Die Begrenzungsparameter können kontinuierlich oder in vorgegebenen Zeitabständen oder bei Inbetriebnahme einer Maschine ermittelt werden.

Die Begrenzungsparameter können beispielsweise Dynamikparameter zur Begrenzung der mechanischen Bewegung und/oder Prozessparameter zur Begrenzung des Wirkungsbereichs der Maschine oder einer Komponente der Maschine umfassen. Die Begrenzungsparameter können insbesondere eine Bahngeschwindigkeit, Geschwindigkeit je Achse oder Antrieb, eine Winkelgeschwindigkeit, eine Längsbeschleunigung, eine Beschleunigung je Achse oder Antrieb, eine Winkelbeschleunigung, einen Aktionsradius, eine Raumnutzung, eine Kraft, ein Druck, oder eine Auslenkung der Maschine oder einer Komponente der Maschine begrenzen.

Die Begrenzungsparameter werden von einem Begrenzungsmodul auf die Steuerbefehle der Steuervorrichtung angewendet, siehe Schritt S3. Bei mangelhafter Netzwerkqualität werden die Begrenzungsparameter derart ermittelt, dass die mechanische Bewegung und/oder der Wirkungsbereich des Roboters, bzw. allgemein der Maschine, eingeschränkt wird. In anderen Worten, durch die Begrenzungsparameter werden die Steuerbefehle für den Roboter abhängig von der Netzwerkqualität angepasst. Insbesondere wird die durch einen Steuerbefehl bestimmte mechanische Bewegung und/oder der Wirkungsbereich der Maschine derart begrenzt, dass ein Ziel des Steuerbefehls beibehalten wird. Beispielsweise kann die von der Steuerung befehligte Bewegung verlangsamt werden. Es ist auch möglich, dass der Wirkungsbereich, wie z.B. ein Aktionsradius, einer Maschine eingeschränkt wird, wenn die Netzwerkqualität nicht maximal ist. Insbesondere bei sicherheitskritischen Systemen kann ein Begrenzungsparameter die mechanische Bewegung und/oder den Wirkungsbereich derart anpassen, dass bei weiterem Betrieb der Maschine Sicherheitsvorgaben eingehalten werden und weitere Steuerbefehle empfangen und korrekt ausgeführt werden können.

Im Schritt S4 wird der Steuerbefehl an die Maschine, im Beispiel ein Roboter, ausgegeben. Abhängig von der ermittelten Netzwerkqualität ist die von der Steuervorrichtung bestimmte mechanische Bewegung und/oder der Wirkungsbereich der Maschine beschränkt.

Figur 2 zeigt ein erstes Ausführungsbeispiel des erfindungsgemäßen Systems 10, wobei eine Maschine 100 über eine Kommunikationsverbindung C mit einem Daten- oder Kommunikationsnetzwerk NW verbunden ist und von dort aus gesteuert wird. Die Kommunikationsverbindung C kann insbesondere drahtlos oder drahtgebunden eingerichtet sein. Die Maschine 100 kann beispielsweise ein Industrieroboter oder eine Fertigungsmaschine sein, die von einer Steuervorrichtung 101b gesteuert wird. Die Steuervorrichtung 101b ist insbesondere der Maschine 100 zugeordnet. Die Steuervorrichtung 101b ist beispielsweise als Applikation auf einem Server 200, wie z.B. einem Cloud- oder einem Edge-Cloud-Server, realisiert. Beispielsweise werden von der Applikation Steuerbefehle an die Maschine 100 übermittelt. Die Steuerung der mechanischen Bewegung und/oder des Wirkungsbereichs der Maschine oder einer Komponente der Maschine 100 kann abhängig von der Netz- oder Netzwerkqualität des Netzwerks NW sein. Es kann die Netzqualität als mindestens ein Netzwerkgüteparameter von einer Netzwerk-Überwachungseinheit 400 eines Netzbetreibers, bereitgestellt und einem Begrenzungsmodul 500 übermittelt werden. Beispielsweise kann die Netzwerkqualität kontinuierlich von einem Netzbetreiber überwacht werden und in regelmäßigen Zeitabständen Netzwerkgüteparameter bereitgestellt werden. Abhängig von der Netzwerkqualität wird mindestens ein Begrenzungsparameter vom Begrenzungsmodul 500 bereitgestellt, indem anhand des mindestens einen Netzwerkgüteparameters der mindestens eine Begrenzungsparameter ermittelt wird. Das Begrenzungsmodul 500 kann Teil der Steuervorrichtung 101b oder als eine Applikation auf dem Server 200 eingerichtet sein.

Das Begrenzungsmodul ist beispielsweise zusätzlich zu einer Steuerungsvorrichtung der Maschine eingerichtet. In anderen Worten, die Steuerbefehle, insbesondere die Befehle zur Begrenzung von mechanischer Bewegung und/oder Wirkungsbereich, des Begrenzungsmoduls können auf die Steuerbefehle einer Steuervorrichtung gerichtet sein.
Beispielsweise werden die Steuerbefehle der Steuervorrichtung durch das Begrenzungsmodul angepasst. Es kann die Begrenzung der Steuerung durch das Begrenzungsmodul unabhängig realisiert sein, insbesondere wird nicht die ursprüngliche Steuerkonfiguration verändert sondern lediglich, abhängig von den Netzwerkbedingungen, die Steuerbefehle für die Maschine angepasst. Bei Änderungen der Netzwerkbedingungen können die Begrenzungsparameter entsprechend angepasst werden.

Anhand des mindestens einen Begrenzungsparameters wird vom Begrenzungsmodul 500 die von der Steuervorrichtung bestimmte mechanische Bewegung der Maschine 100 begrenzt. In anderen Worten, die Steuerbefehle der Steuervorrichtung 101b werden mittels der Begrenzungsparameter, die vom Begrenzungsmodul 500 bereitgestellt werden, auf dem Server angepasst und an die Maschine 100 übermittelt. Beispielsweise kann eine von der Steuerung bestimmte mechanische Bewegung dadurch verlangsamt werden.

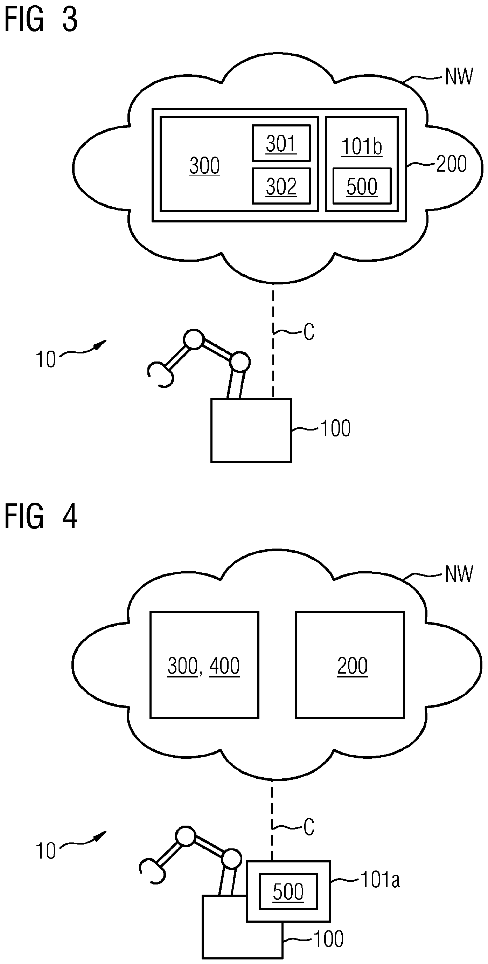

Figur 3 zeigt ein zweites Ausführungsbeispiel des erfindungsgemäßen Systems 10. Wie in Figur 2 wird hier eine Maschine 100 von einem Server 200 aus über ein Netzwerk NW gesteuert, wobei die Steuervorrichtung 101b ein Begrenzungsmodul 500 umfasst, welches mittels Begrenzungsparametern die mechanische Bewegung und/oder den Wirkungsbereich der Maschine 100 einschränkt. Der Server 200 umfasst des Weiteren in diesem Ausführungsbeispiel eine Netzwerk-Überwachungseinheit 300, die einen Testdaten-Generator 301 und eine Vermessungseinheit 302 umfasst. Die Netzwerk-Überwachungseinheit 300 kann beispielsweise als eine Applikation auf dem Server 200 realisiert sein. Der Testdaten-Generator generiert Testdaten zur Überwachung der Netzwerkqualität des Daten- oder Kommunikationsnetzwerks NW. Das Vermessungsmodul 302 kann beispielsweise die Netzwerkverbindung zur Maschine 100 mittels der Testdaten ausmessen. Das Ergebnis der Messung des Vermessungsmoduls 302 kann als mindestens ein Netzwerkgüteparameter bereitgestellt werden, woraus mindestens ein Begrenzungsparameter ermittelt wird. Bei eingeschränkter Netzwerkqualität werden die Steuerbefehle der Steuervorrichtung 101b anhand der Begrenzungsparameter derart modifiziert, dass die mechanische Bewegung und/oder der Wirkungsbereich der Maschine 100 begrenzt wird, ohne den Betrieb der Maschine zu unterbrechen.

Beispielsweise kann die Maschine 100 ein Industrieroboter mit einem schwenkbaren Arm zum Montieren von Werkteilen sein. Die Steuervorrichtung 101b kann beispielsweise einen Steuerbefehl zum Montieren eines Werkteils an einem Werkstück umfassen, wobei die Montierung durch den schwenkbaren Arm des Roboters mit einer bestimmten Geschwindigkeit durchgeführt werden soll. Bei schlechten Netzwerkbedingungen kann ein Begrenzungsparameter ermittelt werden, der die Geschwindigkeit der Montage begrenzt, ohne die Montage selbst zu unterbrechen. Es ist außerdem möglich, dass der Roboterarm einen bestimmten Aktionsradius besitzt, welcher bei schlechter Netzwerkqualität eingeschränkt werden kann, um beispielsweise Sicherheitsbedingungen einzuhalten. Die Begrenzungen können insbesondere bei schlechter Netzqualität dazu dienen, die Steuerung der Maschine zu kontrollieren und weiterhin zu ermöglichen. Die Überwachung der Netzwerkqualität kann durch eine Überwachungseinheit 300 beispielsweise in regelmäßigen Zeitabständen ermittelt werden, so dass die Begrenzungsparameter regelmäßig aktualisiert werden können.

Figur 4 zeigt ein drittes Ausführungsbeispiel des erfindungsgemäßen Systems 10. Es wird eine Maschine 100 gezeigt, die über eine Kommunikationsverbindung C mit einem Daten- oder Kommunikationsnetzwerk NW verbunden ist. Die Maschine 100 erhält beispielsweise von einem Server 200 und über das Daten-oder Kommunikationsnetzwerk NW Steuerbefehle, die von einer Steuervorrichtung 101a umgesetzt werden. Beispielsweise werden die Steuerbefehle von einem Aktor der Maschine 100 umgesetzt. Die Steuervorrichtung 101a ist beispielsweise in die Maschine 100 integriert oder der Maschine 100 vorgeschaltet oder mit der Maschine 100 gekoppelt. Insbesondere kann die Steuervorrichtung 101a mit dem Netzwerk NW über eine kabellose oder eine kabelgebundene Kommunikationsverbindung C verbunden sein. Eine Netzwerk-Überwachungseinheit 300,400, wie in Figur 2 und 3 beschrieben, stellt Netzwerkgüteparameter, zur Charakterisierung der Netzwerkeigenschaften und Qualität, bereit. Diese werden vom Server 200 über das Daten- oder Kommunikationsnetzwerk NW an die Maschine 100 übermittelt. Abhängig von den Netzwerkgüteparametern werden im Begrenzungsmodul 500 Begrenzungsparameter ermittelt, um die Steuerbefehle zum Steuern der Maschine 100 derart anzupassen, dass ein Betrieb der Maschine 100 bei einer eingeschränkten Netzwerkqualität gewährleistet ist. Das Begrenzungsmodul 500 kann als Teil der Steuervorrichtung 101a in der Maschine 100 oder der Maschine 100 vorgeschaltet ausgebildet sein. Es ist möglich, dass die Maschine 100 anhand der vom Server 200 bereitgestellten Netzwerkgüteparameter die Begrenzungsparameter selbst ermittelt und die Steuerbefehle dementsprechend anpasst bzw. einschränkt.

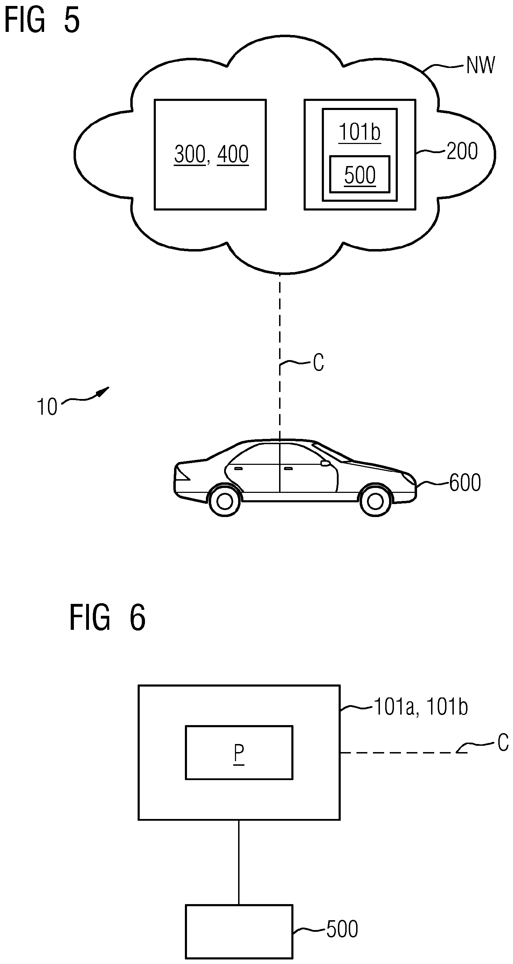

Figur 5 zeigt ein viertes Ausführungsbeispiel des erfindungsgemäßen Systems 10. Es ist als über ein Netzwerk gesteuerte Maschine 100 ein autonomes Fahrzeug 600, hier beispielhaft ein Personenkraftwagen, gezeigt, welches über ein drahtloses Daten- oder Kommunikationsnetzwerk NW mittels einer auf einem Server 200 installierten Steuerapplikation 101b gesteuert wird. Das autonome Fahrzeug 600 kann, wie die Maschine 100 in Figur 2 bis 4 gezeigt, von einer Steuervorrichtung 101b auf einem Server 200 oder von einer internen Steuervorrichtung 101a (nicht dargestellt) gesteuert werden.

Das autonome Fahrzeug 600 kann außerdem ein Schiff, ein Schienenfahrzeug, ein Lastkraftwagen, ein Flugobjekt, ein schwimmendes Objekt oder eine ferngesteuerte, mobile Maschine sein. Beispielsweise wird das autonome Fahrzeug 600 mittels einer Cloud-basierten Steuervorrichtung 101b per Funk über das Netzwerk NW gesteuert. Eine Netzwerk-Überwachungseinheit 300,400 überwacht die Netzwerkqualität und stellt dem Begrenzungsmodul 500 Netzwerkgüteparameter bereit. Abhängig von der Netzwerkgüte kann die mechanische Bewegung und/oder der Wirkungsbereich des autonomen Fahrzeugs 600 angepasst werden. Beispielsweise kann bei eingeschränkten Netzwerkbedingungen die Fahrgeschwindigkeit des autonomen Fahrzeugs 600 begrenzt werden, um z.B. nachfolgende Steuerbefehle zuverlässig umsetzen zu können. Die mechanische Bewegung gemäß dem Steuerbefehl von der Steuervorrichtung 101b, wie z.B. Fahrt von einem ersten Ort zu einem zweiten Ort, wird nicht verändert, sondern lediglich die Fahrtgeschwindigkeit angepasst. Es kann beispielsweise auch der Wirkungsbereich eingeschränkt werden, z.B. kann ein Überholvorgang des autonomen Fahrzeugs 600 unterbunden werden.

Figur 6 zeigt ein Ausführungsbeispiel einer erfindungsgemäßen Steuervorrichtung 101a,101b, welche einer Maschine 100, z.B. gemäß Figur 2 bis 5, zugeordnet ist. Das Begrenzungsmodul 500 kann mit der Steuervorrichtung 101a,101b gekoppelt sein oder als Teil von der Maschine 100 eingerichtet. Die Steuervorrichtung 101a,101b kann insbesondere einen Prozessor umfassen, der beispielsweise mindestens einen Verfahrensschritt des erfindungsgemäßen Verfahrens ausführt.

Bei einem Prozessor kann es sich insbesondere um einen Hauptprozessor, auf Englisch Central Processing Unit, CPU, einen Mikroprozessor oder einen Mikrokontroller, möglicherweise in Kombination mit einer Speichereinheit, wie z.B. ein Speicher in Form eines Arbeitsspeichers (engl. Random-Access Memory, RAM) oder eine Festplatte, zum Speichern von Programmbefehlen, etc. handeln.

Die Steuervorrichtung 101a,101b ist über eine Kommunikationsverbindung C mit einem Daten- oder Kommunikationsnetzwerk NW verbunden, über welches die Steuervorrichtung Steuerbefehle empfängt. So kann die Steuervorrichtung 101a,101b Steuerbefehle von einem zentralen Server 200 empfangen oder einer Maschine übermitteln, wie beispielhaft in Figur 2 bis 5 gezeigt.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum rechnergestützten Begrenzen einer mechanischen Bewegung und/oder eines Wirkungsbereichs einer über ein Kommunikations- oder Datennetzwerk gesteuerten Maschine,
wobei
die mechanische Bewegung und/oder der Wirkungsbereich der Maschine (100) anhand mindestens eines von einer Netzwerkqualität des Kommunikations- oder Datennetzwerks (NW) abhängigen Begrenzungsparameters begrenzt wird.

2. Verfahren nach Anspruch 1, wobei die mechanische Bewegung und/oder der Wirkungsbereich der Maschine (100) durch eine Steuervorrichtung (101a, 101b), die über das Kommunikations-oder Datennetzwerk (NW) Steuerbefehle empfängt, und die in die Maschine (100) integriert oder mit der Maschine (100) gekoppelt oder als Applikation auf einem Server (200) implementiert ist, gesteuert wird.

3. Verfahren nach einem der vorhergehenden Ansprüche, wobei Testdaten zur Überwachung der Netzwerkqualität generiert werden und die Netzwerkqualität mittels der Testdaten ermittelt und daraus mindestens ein Netzwerkgüteparameter bereitgestellt wird.

4. Verfahren nach Anspruch 3, wobei abhängig von dem mindestens einen Netzwerkgüteparameter der mindestens eine Begrenzungsparameter ermittelt wird.

5. Verfahren nach Anspruch 3, wobei die Netzwerkqualität kontinuierlich oder in vorgegebenen Zeitabständen ermittelt wird.

6. Verfahren nach einem der vorhergehenden Ansprüche, wobei der mindestens eine Begrenzungsparameter kontinuierlich oder wiederholt in vorgegebenen Zeitabständen oder bei Inbetriebnahme der Maschine ermittelt wird.

7. Verfahren nach einem der vorhergehenden Ansprüche, wobei anhand des mindestens einen Begrenzungsparameters eine Bahngeschwindigkeit, Geschwindigkeit je Achse oder Antrieb, eine Winkelgeschwindigkeit, eine Längsbeschleunigung, eine Beschleunigung je Achse oder Antrieb, eine Winkelbeschleunigung, einen Aktionsradius, eine Raumnutzung, eine Kraft, ein Druck, oder eine Auslenkung der Maschine (100) begrenzt wird.

8. System zum rechnergestützten Begrenzen einer mechanischen Bewegung und/oder eines Wirkungsbereichs einer über ein Kommunikations- oder Datennetzwerk gesteuerten Maschine,
umfassend
ein Begrenzungsmodul (500), das der Maschine (100) zugeordnet ist und das derart ausgebildet ist, die mechanische Bewegung und/oder den Wirkungsbereich der Maschine (100) anhand mindestens eines von einer Netzwerkqualität des Kommunikations-oder Datennetzwerks (NW) abhängigen Begrenzungsparameters zu begrenzen.

9. System (10) nach Anspruch 8 umfassend eine Steuervorrichtung (101a), die in die Maschine (100) integriert oder mit der Maschine (100) gekoppelt ist, und derart ausgebildet ist, die mechanische Bewegung und/oder den Wirkungsbereich der Maschine (100) über das Kommunikations- oder Datennetzwerk zu steuern.

10. System (10) nach Anspruch 8 umfassend eine Steuervorrichtung (101b), die als Applikation auf einem Server (200) implementiert ist, und derart ausgebildet ist, die mechanische Bewegung und/oder den Wirkungsbereich der Maschine (100) über das Kommunikations- oder Datennetzwerk zu steuern.

11. System (10) nach einem der Ansprüche 8 bis 10 umfassend einen Testdaten-Generator (301), der derart ausgebildet ist, Testdaten zur Überwachung der Netzwerkqualität zu generieren und bereitzustellen.

12. System (10) nach Anspruch 11 umfassend ein Vermessungsmodul (302), das derart ausgebildet ist, mittels der Testdaten die Netzwerkqualität zu ermitteln und mindestens einen Netzwerkgüteparameter bereitzustellen.

13. System (10) nach einem der Ansprüche 8 bis 12, wobei das Begrenzungsmodul (500) derart ausgebildet ist, den mindestens einen Begrenzungsparameter abhängig von dem mindestens einen Netzwerkgüteparameter zu ermitteln.

14. Steuervorrichtung (101a,101b), die einer über ein Kommunikations- oder Datennetzwerk (NW) gesteuerten Maschine (100) zugeordnet ist und derart ausgebildet ist,
- Steuerbefehle über das Kommunikations- oder Datennetzwerk (NW) zu empfangen
und
- die mechanische Bewegung und/oder den Wirkungsbereich der Maschine (100) zu steuern, wobei die mechanische Bewegung und/oder der von Wirkungsbereich der Maschine (100) anhand mindestens eines von einer Netzwerkqualität des Kommunikations- oder Datennetzwerks (NW) abhängigen Begrenzungsparameters begrenzt wird.

15. Computerprogrammprodukt, das direkt in einen programmierbaren Computer ladbar ist, umfassend Programmcodeteile, die dazu geeignet sind, die Schritte des Verfahrens nach einem der Ansprüche 1 bis 7 durchzuführen.
